# FASCICULE DE BREVET EUROPEEN

(11) **EP 0 930 274 B1**
(45) Date de publication et mention de la délivrance du brevet: **31.08.2005**
(21) Numéro de dépôt: 99200085.1
(22) Date de dépôt: 09.01.1999
(51) Int. Cl.: C02F 9/00

(54) **Procédé d'épuration d'un milieu aqueux contaminé par de l'étain**
Verfahren zur Reinigung von einem wässrigen Zinn enthaltenden Mediums
Method for purifying an aqueous tin-containing medium

(30) Priorité: 19.01.1998 FR 9800583
(43) Date de publication de la demande: 21.07.1999
(73) Titulaire: SOLVAY (Société Anonyme), 1050 Bruxelles (BE)
(72) Inventeur: Humblot, Cédric, 54110 Dombasle-sur-Meurthe (FR); Ninane, Léon, 54110 Dombasle-sur-Meurthe (FR)
(74) Mandataire: Jacques, Philippe

(56) Documents cités:
- EP-A- 0 410 877
- WO-A-95/29875
- US-A- 4 200 528

## Description

L'invention concerne l'épuration des milieux aqueux contaminés par de l'étain, en vue d'en éliminer ce métal.

Divers procédés industriels génèrent des liquides résiduaires aqueux contaminés par des métaux lourds, particulièrement de l'étain. C'est notamment le cas des liquides résiduaires de certains procédés d'épuration des fumées produites par la combustion de combustibles d'origine fossile ou générées par l'incinération des déchets industriels, ménagers, urbains ou hospitaliers.

Du fait qu'ils sont contaminés par des métaux lourds, ces liquides résiduaires ne peuvent généralement pas être rejetés dans des cours d'eau ni être utilisés dans des processus industriels sans subir au préalable une épuration.

L'étain est une impureté difficile à éliminer.

Selon le document WO 95/29875, on épure un milieu aqueux en métaux lourds, en le mettant en contact avec un agent de captation comprenant un silicate ou aluminosilicate et un carbonate. Selon ce document, les métaux lourds auxquels le procédé s'applique sont le cadmium, le chrome, le cuivre, le nickel, le plomb, le zinc, l'aluminium et le fer. L'étain n'est pas envisagé. Selon le document EP-A-0410877 un milieu aqueux contaminé en étain est épuré au moyen d'un silicate de potassium, sous forme d'échangeur ionique insoluble.

On a maintenant trouvé qu'en traitant un milieu aqueux contaminé par de l'étain, avec un silicate de métal alcalin sous forme de solution aqueuse, il était possible de l'épurer en cette impureté.

L'invention concerne dès lors un procédé d'épuration d'un milieu aqueux, contaminé par de 'étain, selon lequel on traite le milieu aqueux avec du silicate de métal alcalin sous forme de solution aqueuse en sorte de former un compose solide avec l'étain, et on sépare ledit composé solide.

Dans le procédé selon l'invention, le milieu aqueux peut être indifféremment un liquide ou une boue pompable. L'origine du milieu aqueux n'est pas critique. Celui-ci peut par exemple comprendre des eaux de lavage de fumées ou d'autres solutions ou suspensions aqueuses résiduaires de processus industriels. Il contient nécessairement de l'étain, à l'état d'un composé hydrosoluble. La teneur du milieu aqueux en étain n'est pas critique, ce métal étant toutefois généralement présent en une quantité supérieure à 0,5 ppm, habituellement au moins égale à 0,8 ppm. La teneur maximum en étain dans le milieu aqueux soumis au procédé selon l'invention n'est pas critique et peut excéder sa solubilité dans le milieu aqueux. Elle excède toutefois rarement 2 ppm et se situe généralement au-dessous de 1 ppm. En plus de l'étain, le milieu aqueux peut contenir d'autres impuretés, notamment d'autres métaux, par exemple de l'aluminium.

Par définition, le silicate de métal alcalin est un composé de formule général

M₂O.xSiO₂.

dans laquelle M désigne au moins un métal alcalin.

Le silicate de métal alcalin peut avantageusement comprendre du silicate de sodium, seul ou en mélange avec un silicate d'au moins un métal alcalin différent du sodium. Dans le cas ou le silicate de métal alcalin comprend du silicate de sodium, celui-ci est de préférence du métasilicate de sodium anhydre ou hydraté, de formule générale

Na₂O.SiO₂.nH₂O

dans laquelle n = 0, 5 ou 9.

On préfère que le silicate de métal alcalin soit exclusivement constitué par du silicate de sodium, spécialement du métasilicate de sodium anhydre ou pentahydraté.

Dans le procédé selon l'invention le silicate de métal alcalin est mis en oeuvre sous la forme d'une solution aqueuse.

Le silicate de métal alcalin doit être mis en oeuvre en une quantité suffisante pour former un composé insoluble avec l'étain. On a observé que l'on obtenait de bons résultats avec une quantité de silicate de métal alcalin au moins égale à la quantité stoechiométrique correspondant à la formation de silicate stanique, bien que la formation de ce composé n'ait pas été mise en évidence. Il n'y a pas de contre-indication à utiliser un excès de silicate de métal alcalin. En pratique toutefois, on n'a pas intérêt à mettre en oeuvre une quantité de silicate de métal alcalin largement supérieure à la quantité strictement nécessaire pour précipiter la totalité de l'étain. La quantité optimum en silicate de métal alcalin peut dès lors être déterminée aisément par un travail de routine au laboratoire.

Dans le cas où le milieu aqueux contient d'autres métaux ou composés susceptibles de réagir avec le silicate de métal alcalin, il convient évidemment d'en tenir compte pour déterminer la quantité nécessaire de silicate de métal alcalin. En particulier, dans le cas où le milieu aqueux contient de l'aluminium, en plus de l'étain, la quantité de silicate de métal alcalin à mettre en oeuvre doit être au moins suffisante pour former un composé solide avec l'aluminium et un composé solide avec l'étain. La quantité théorique de silicate de métal alcalin correspondant à l'aluminium doit normalement être au moins égale à la quantité stoechiométrique correspondant à la formation de silicate d'alumine ou d'aluminosilicate de métal alcalin insoluble.

A l'issue du traitement avec le silicate de métal alcalin, l'étain se trouve dans le milieu aqueux à l'état d'un composé insoluble. Tout moyen approprié connu peut être utilisé pour séparer ce composé solide du milieu aqueux, par exemple une filtration, une sédimentation suivie d'une décantation, ou une combinaison de ces deux moyens. La filtration est le moyen préféré.

Dans une forme d'exécution particulière du procédé selon l'invention, on soumet le milieu aqueux à une filtration avant de le traiter avec le silicate de métal alcalin.

Dans une autre forme d'exécution du procédé selon l'invention, on génère le silicate de métal alcalin in situ dans le milieu aqueux, en y faisant réagir du carbonate de métal alcalin et de la silice. Cette forme de réalisation de l'invention trouve une application intéressante dans le cas où le milieu aqueux contient déjà du carbonate de sodium, comme c'est naturellement le cas des solutions aqueuses de chlorure de sodium obtenues en dispersant dans de l'eau, un résidu solide recueilli de l'épuration d'une fumée avec du bicarbonate de sodium. Une technique permettant l'obtention de telles solutions aqueuses de chlorure de sodium est décrite dans le brevet européen EP-603 218 [SOLVAY (Société Anonyme)].

Le procédé selon l'invention est spécialement destiné aux milieux aqueux basiques, de pH supérieur à 7. Il est bien adapté à l'épuration des milieux aqueux de pH au moins égal à 9, spécialement à ceux de pH au moins égal à 10.

Le procédé selon l'invention trouve une application intéressante pour l'épuration des milieux liquides résiduaires des techniques d'épuration des fumées générées par la combustion de combustibles fossiles ou de biomasse ou par l'incinération de déchets industriels, ménagers, urbains ou hospitaliers. Il s'applique notamment au traitement du milieu aqueux recueilli du lavage de telles fumées par de l'eau ou une solution aqueuse d'hydroxyde de sodium. Une autre application du procédé selon l'invention concerne les milieux aqueux obtenus en dispersant dans de l'eau, un résidu solide recueilli du traitement sec ou semi humide d'une telle fumée avec un composé basique (par exemple de l'oxyde de calcium, de l'hydroxyde de calcium, du carbonate de sodium, du bicarbonate de sodium ou du sesquicarbonate de sodium). L'invention trouve une application spécialement avantageuse pour le traitement des solutions aqueuses de chlorure de sodium recueillies du traitement sec ou semi-humide d'une fumée contaminée par du chlorure d'hydrogène, avec du carbonate, du bicarbonate ou du sesquicarbonate de sodium, comme décrit dans le brevet européen EP-603 218 [SOLVAY (Société Anonyme)].

L'intérêt de l'invention va ressortir de la description suivante de deux exemples d'application du procédé selon l'invention.

Les exemples dont la description suit concerne des essais d'épuration d'une solution aqueuse de chlorure de sodium contaminée par divers métaux parmi lesquels figuraient de l'étain et de l'aluminium. La composition pondérale de la solution aqueuse est reproduite au tableau 1 qui suit.

**Tableau 1**

| | |
|---|---|
| NaCl | 163,9 g/kg |
| Na₂SO₄ | 21,0 g/kg |
| Na₂CO₃ | 38,5 g/kg |
| NaHCO₃ | 13,5 g/kg |
| Al | 0,9 mg/kg |
| Sn | 0,8 mg/kg |
| Bi | 0,8 mg/kg |
| Cd | 0,7 mg/kg |
| Cr | 1,80 mg/kg |
| Fe | 8,5 mg/kg |
| Hg | 0,13 mg/kg |
| Pb | 198 mg/kg |
| Sb | 1,9 mg/kg |
| Se | 0,13 mg/kg |
| Zn | 0,6 mg/kg |

### Exemple 1.

La solution se trouvant à une température de 50 °C, on y a introduit du métasilicate de sodium pentahydraté (Na₂O.SiO₂.5H₂O), en une quantité pondérale correspondant à 300 mg de silicium par kg de la solution. Le pH de la solution a été ajusté à Après homogénéisation du milieu réactionnel, on a soumis celui-ci à une filtration pour en éliminer les substances insolubles, on a recueilli le filtrat et on a analysé sa composition en ce qui concerne ses impuretés. Le résultat de l'analyse est reproduit au tableau 2.

**Tableau 2**

| | |
|---|---|
| Al | < 0,4 mg/kg |
| Sn | < 0,4 mg/kg |
| Bi | < 0,8 mg/kg |
| Cd | 0,7 mg/kg |
| Cr | 1,10 mg/kg |
| Fe | < 0,04 mg/kg |
| Hg | 0,16 mg/kg |
| Pb | 120 mg/kg |
| Sb | 2,3 mg/kg |
| Se | 0,42 mg/kg |
| Zn | 1,4 mg/kg |

### Exemple 2.

On a répété toutes les conditions de l'essai de l'exemple 1, à la seule différence que le métasilicate de sodium pentahydraté a été mis en oeuvre en une quantité pondérale correspondant à 600 mg de silicium par kg de la solution. Les résultats de l'essai d'épuration sont reproduits au tableau 3.

**Tableau 3**

| | |
|---|---|
| Al | <0,4 mg/kg |
| Sn | <0,4 mg/kg |
| Bi | < 0,8 mg/kg |
| Cd | 0,6 mg/kg |
| Cr | 1,10 mg/kg |
| Fe | < 0,04 mg/kg |
| Hg | 0,11 mg/kg |
| Pb | 113 mg/kg |
| Sb | 1,9 mg/kg |
| Se | 0,37 mg/kg |
| Zn | 0,7 mg/kg |

Les résultats des essais des exemples 1 et 2 montrent la grande efficacité du procédé selon l'invention sur l'épuration en étain et, accessoirement, en aluminium. On observe par ailleurs la faible performance du procédé pour ce qui concerne l'épuration en cadmium, en chrome, en mercure, en plomb, en antimoine, en sélénium et en zinc.

## Revendications

1. Procédé d'épuration d'un milieu aqueux, contaminé par de l'étain, selon lequel on traite le milieu aqueux avec du silicate de métal alcalin, en sorte de former un composé solide avec l'étain et on sépare ledit composé solide **caractérisé en ce que** le silicate de métal alcalin est mis en oeuvre sous forme de solution aqueuse.

2. Procédé selon la revendication 1, **caractérisé en ce que** le silicate de métal alcalin est mis en oeuvre en une quantité au moins égale à la quantité stoechiométrique correspondant à la formation de silicate stanique.

3. Procédé selon la revendication 1 ou 2, **caractérisé en ce que**, dans le cas où le milieu aqueux contient de l'aluminium, on le traite avec une quantité suffisante de silicate de métal alcalin pour former avec l'aluminium, un aluminosilicate de métal alcalin insoluble, que l'on sépare.

4. Procédé selon l'une quelconque des revendications 1 à 3, **caractérisé en ce qu'**on génère le silicate de métal alcalin in situ dans le milieu aqueux, en y faisant réagir du carbonate de métal alcalin et de la silice.

5. Procédé selon l'une quelconque des revendications 1 à 4, **caractérisé en ce que** le silicate de métal alcalin comprend du silicate de sodium.

6. Procédé selon l'une quelconque des revendications 1 à 5, **caractérisé en ce que** le milieu aqueux est basique.

7. Procédé selon la revendication 6, **caractérisé en ce que** le milieu aqueux présente un pH supérieur à 9.

8. Procédé selon l'une quelconque des revendications 1 à 7, **caractérisé en ce que** le milieu aqueux comprend une solution aqueuse de chlorure de sodium.

9. Procédé selon la revendication 8, **caractérisé en ce que** la solution aqueuse de chlorure de sodium comprend du carbonate de sodium dissous.

10. Procédé selon la revendication 8 ou 9, **caractérisé en ce que** la solution aqueuse de chlorure de sodium est une solution aqueuse résiduaire de l'épuration d'une fumée générée par l'incinération de déchets contenant des composés chlorés.

## Patentansprüche

1. Verfahren zur Reinigung eines mit Zinn verunreinigten wäßrigen Milieus, wonach das wäßrige Milieu mit Alkalimetallsilikat behandelt wird, um eine feste Verbindung mit dem Zinn auszubilden und diese feste Verbindung abgetrennt wird, **dadurch gekennzeichnet, daß** das Alkalimetallsilikat in Form einer wäßrigen Lösung eingesetzt wird.

2. Verfahren nach Anspruch 1, **dadurch gekennzeichnet, daß** das Alkalimetallsilikat in einer Menge eingesetzt wird, die wenigstens der stöchiometrischen Menge entsprechend der Bildung von Zinnsilikat gleich ist.

3. Verfahren nach Anspruch 1 oder 2, **dadurch gekennzeichnet, daß** für den Fall, daß das wäßrige Milieu Aluminium enthält, das Milieu mit einer ausreichenden Menge Alkalimetallsilikat behandelt wird, um mit dem Aluminium ein unlösliches Aluminosilikat des Alkalimetalls auszubilden, das abgetrennt wird.

4. Verfahren nach einem der Ansprüche 1 bis 3, **dadurch gekennzeichnet, daß** das Alkalimetallsilikat in situ im wäßrigen Milieu ausgebildet wird, indem darin ein Alkalimetallcarbonat mit Siliciumdioxid zur Reaktion gebracht wird.

5. Verfahren nach einem der Ansprüche 1 bis 4, **dadurch gekennzeichnet, daß** das Alkalimetallsilikat Natriumsilikat umfaßt.

6. Verfahren nach einem der Ansprüche 1 bis 5, **dadurch gekennzeichnet, daß** das wäßrige Milieu basisch ist.

7. Verfahren nach Anspruch 6, **dadurch gekennzeichnet, daß** das wäßrige Milieu einen pH-Wert von über 9 aufweist.

8. Verfahren nach einem der Ansprüche 1 bis 7, **dadurch gekennzeichnet, daß** das wäßrige Milieu eine wäßrige Natriumchloridlösung umfaßt.

9. Verfahren nach Anspruch 8, **dadurch gekennzeichnet, daß** die wäßrige Natriumchloridlösung gelöstes Natriumcarbonat umfaßt.

10. Verfahren nach Anspruch 8 oder 9, **dadurch gekennzeichnet, daß** die wäßrige Natriumchloridlösung eine wäßrige Restlösung aus der Reinigung eines Rauchgases ist, das durch die Verbrennung von Chlorverbindungen enthaltenden Abfällen gebildet worden ist.

## Claims

1. Method for purifying an aqueous medium, contaminated with tin, in which the aqueous medium is treated with an alkali metal silicate, so as to form a solid compound with the tin, and the said solid compound is separated, **characterized in that** the alkali metal silicate is used in aqueous solution form.

2. Method according to Claim 1, **characterized in that** the alkali metal silicate is used in an amount at least equal to the stoichiometric amount corresponding to the formation of stannic silicate.

3. Method according to Claim 1 or 2, **characterized in that**, in the case in which the aqueous medium contains aluminium, it is treated with a sufficient amount of alkali metal silicate to form, with the aluminium, an insoluble alkali metal aluminosilicate, which is separated.

4. Method according to any one of Claims 1 to 3, **characterized in that** the alkali metal silicate is generated *in situ* in the aqueous medium, by making the alkali metal carbonate react therein with silica.

5. Method according to any one of Claims 1 to 4, **characterized in that** the alkali metal silicate comprises sodium silicate.

6. Method according to any one of Claims 1 to 5, **characterized in that** the aqueous medium is basic.

7. Method according to Claim 6, **characterized in that** the aqueous medium has a pH of greater than 9.

8. Method according to any one of Claims 1 to 7, **characterized in that** the aqueous medium comprises an aqueous sodium chloride solution.

9. Method according to Claim 8, **characterized in that** the aqueous sodium chloride solution includes dissolved sodium carbonate.

10. Method according to Claim 8 or 9, **characterized in that** the aqueous sodium chloride solution is a residual aqueous solution from the purification of a fume generated by the incineration of waste containing chlorinated compounds.
